# EUROPEAN PATENT APPLICATION

(11) **EP 4 675 692 A1**
(43) Date of publication of application: **07.01.2026**
(21) Application number: 24763528.7
(22) Date of filing: 05.02.2024
(51) Int. Cl.: H01M 4/13

(54) **ELECTRODE FOR NONAQUEOUS ELECTROLYTE SECONDARY BATTERY, AND NONAQUEOUS ELECTROLYTE SECONDARY BATTERY**

(30) Priority: 27.02.2023 JP 2023028285
(71) Applicant: Panasonic Energy Co., Ltd., Osaka 570-8511 (JP)
(72) Inventor: KUSUMOTO, Ryosuke, Kadoma-shi, Osaka 571-0057 (JP); SATO, Naomichi, Kadoma-shi, Osaka 571-0057 (JP); SUZUKI, Yuya, Kadoma-shi, Osaka 571-0057 (JP)
(74) Representative: Novagraaf International SA
(86) International application number: PCT/JP2024/003672
(87) International publication number: WO 2024/181044

(57) **Abstract**

According to the present disclosure, provided is an electrode for a nonaqueous electrolyte secondary battery whereby reaction unevenness is suppressed. The electrode for a nonaqueous electrolyte secondary battery comprises a current collector and a mixture layer arranged on the surface of the current collector. The mixture layer has a stacked structure comprising n layers (n ≥ 2) from a first layer arranged on the surface of the current collector to an nth layer arranged on the outer surface, and the exchange current density I₁ at a 50% SOC of the first layer is greater than the exchange current density Iₙ at a 50% SOC of the nth layer.

## Description

### TECHNICAL FIELD

The present disclosure relates to an electrode for a non-aqueous electrolyte secondary battery and a non-aqueous electrolyte secondary battery.

### BACKGROUND ART

Recently, applications of a non-aqueous electrolyte secondary battery have expanded to a power source for an electric vehicle and a power storage device for utilizing renewable energy. The battery capacity of the non-aqueous electrolyte secondary battery may decrease with repeated charge and discharge, and improvement in charge-discharge cycle characteristics is desired.

Patent Literature 1 discloses a technique of dividing a mixture layer of an electrode into a separator side and a current collector side, and adjusting values of reaction resistance of the mixture layer and a non-aqueous electrolyte liquid, diffusion resistance of Li ions, and ohmic resistance so as to differ between the separator side and the current collector side by providing differences in porosity, amount of conductive auxiliary agent, amount of binder, particle size of active material, and the like. Patent Literature 1 describes that the above technique suppresses uneven reactions of the mixture layer and improves the charge-discharge cycle characteristics.

### CITATION LIST

### PATENT LITERATURE

PATENT LITERATURE 1: International Publication No. WO2018/179894

### SUMMARY

In the technique disclosed in Patent Literature 1, however, when one of the reaction resistance, the diffusion resistance of Li ions, and the ohmic resistance is controlled in a direction of suppressing an uneven reaction, the other resistance may turn in a direction of increasing the uneven reaction. In the technique disclosed in Patent Literature 1, resistance cannot be controlled without contradiction, and there is still room for improvement in charge-discharge cycle characteristics.

An object of the present disclosure is to provide an electrode for a non-aqueous electrolyte secondary battery in which uneven reactions are suppressed.

An electrode for a non-aqueous electrolyte secondary battery according to the present disclosure comprises a current collector and a mixture layer disposed on a surface of the current collector, the mixture layer has a stacked structure composed of n layers from a first layer disposed on the surface of the current collector to an nth layer (n ≥ 2) disposed on an outer surface, and an exchange current density I₁ at 50% SOC of the first layer is higher than an exchange current density Iₙ at 50% SOC of the nth layer.

A non-aqueous electrolyte secondary battery according to the present disclosure comprises: a positive electrode; and a negative electrode, wherein at least one of the positive electrode and the negative electrode is the above electrode for a non-aqueous electrolyte secondary battery.

The electrode for a non-aqueous electrolyte secondary battery according to the present disclosure can improve the charge-discharge cycle characteristics of the non-aqueous electrolyte secondary battery since uneven reactions are suppressed.

### BRIEF DESCRIPTION OF DRAWING

FIG. 1 is a sectional view of a non-aqueous electrolyte secondary battery of an example of an embodiment.
FIG. 2 is a sectional view of an electrode of an example of an embodiment.

### DESCRIPTION OF EMBODIMENTS

Patent Literature 1 discloses that the uneven reaction due to reaction resistance can be suppressed by, for example, making the binder amount on the separator side larger than the binder amount on the current collector side. Patent Literature 1 also discloses that the uneven reaction due to the diffusion resistance of Li ions in the electrolyte liquid can be suppressed by making the porosity on the separator side larger than the porosity on the current collector side. However, since there is a negative correlation between the binder amount and the porosity, the suppression of the uneven reaction due to the reaction resistance and the suppression of the uneven reaction due to the diffusion resistance of Li ions in the electrolyte liquid have an inverse relationship. In order to further improve the charge-discharge cycle characteristics, it is desirable to control the characteristics of the mixture layer without using parameters that are contrary to each other.

The inventors of the present application have found that an uneven reaction is reduced without contradiction by making the exchange current density of the first layer disposed on the surface of the current collector higher than the exchange current density of the nth layer disposed on the outer surface, or by making the in-solid Li diffusion coefficient of the first layer disposed on the surface of the current collector higher than the in-solid Li diffusion coefficient of the nth layer disposed on the outer surface. The use of the electrode for a non-aqueous electrolyte secondary battery according to the present disclosure improves the charge-discharge cycle characteristics of the non-aqueous electrolyte secondary battery.

Hereinafter, an example of embodiments of the non-aqueous electrolyte secondary battery according to the present disclosure will be described in detail with reference to the drawings. The scope of the present disclosure includes configurations composed of selective combinations of constitutional elements of a plurality of embodiments and modified examples described below. The expression "to" herein means a range including an upper limit and a lower limit of before and after "to".

Hereinafter, a cylindrical battery in which a wound electrode assembly 14 is housed in a bottomed cylindrical exterior housing can 16 will be exemplified as the non-aqueous electrolyte secondary battery, but the exterior body of the battery is not limited to the cylindrical exterior housing can. The non-aqueous electrolyte secondary battery according to the present disclosure may be, for example, a rectangular battery comprising a rectangular exterior housing can, a coin battery comprising a coin-shaped exterior housing can, or a pouch battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

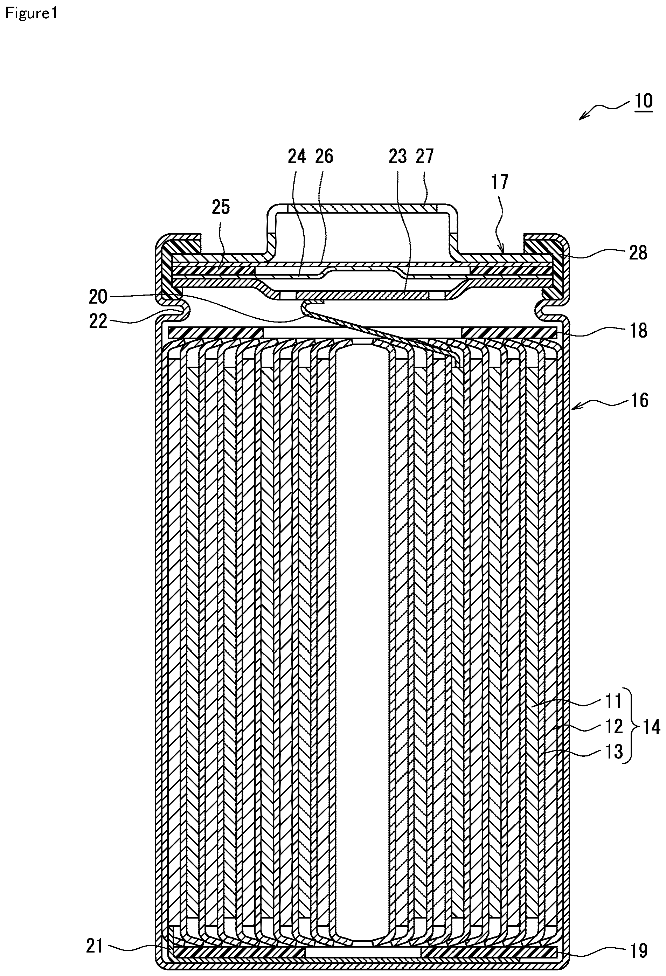

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has lithium-ion conductivity. The non-aqueous electrolyte may be a liquid electrolyte (electrolyte liquid) or may be a solid electrolyte.

The liquid electrolyte (electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, and the like may be used, for example. For the inorganic solid electrolyte, a known material for an all-solid lithium-ion secondary battery or the like (for example, an oxide-type solid electrolyte, a sulfide-type solid electrolyte, halogen-type solid electrolyte, and the like) may be used. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material include a fluororesin, an acrylic resin, and a polyether resin.

For the separator 13, a porous sheet having an ion permeation property and an insulation property is used, for example. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have either a single-layered structure or a stacked structure. On a surface of the separator, a heat-resistant layer or the like may be formed.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to an inner surface on a bottom of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

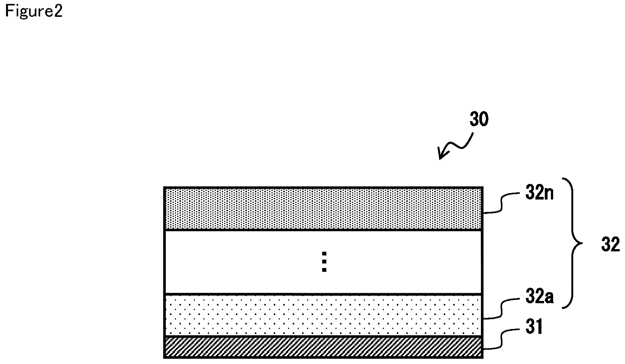

Hereinafter, an electrode 30 for a non-aqueous electrolyte secondary battery (hereinafter, referred to as electrode 30) according to the present embodiment will be described with reference to FIG. 2. FIG. 2 is a sectional view of the electrode 30 of an example of an embodiment. The electrode 30 is applied to at least one of the positive electrode 11 and the negative electrode 12.

The electrode 30 comprises a current collector 31 and a mixture layer 32 disposed on a surface of the current collector 31. When the electrode 30 is applied to the positive electrode 11, the current collector 31 is, for example, a positive electrode current collector such as a foil of a metal stable within a potential range of the positive electrode 11, such as aluminum, or a film in which such a metal is disposed on a surface layer thereof. When the electrode 30 is applied to the negative electrode 12, the current collector 31 is, for example, a negative electrode current collector such as a foil of a metal stable within a potential range of the negative electrode 12, such as copper, or a film in which such a metal is disposed on a surface layer thereof.

The mixture layer 32 of the electrode 30 includes an electrode active material. When the electrode 30 is applied to the positive electrode 11, for example, a lithium-transition metal composite oxide is used as the electrode active material (that is, a positive electrode active material) containing a metal element constituting the mixture layer 32 (that is, a positive electrode mixture layer). The lithium-transition metal composite oxide is, for example, a composite oxide containing metal elements such as Ni, Co, and M (M is at least one element selected from the group consisting of Al, Mn, Fe, Ti, Si, Nb, Mo, W, and Zn) in addition to Li. The preferable lithium-transition metal composite oxide includes a composite oxide containing Ni, Co, and Al, and a composite oxide containing Ni, Co, and Mn.

The lithium-transition metal composite oxide is, for example, a composite oxide represented by the general formula LiₐNiₓCo_{y}M_{z}O_{2-b}, wherein 0.95 ≤ a ≤ 1.2, 0.3 ≤ x ≤ 0.95, 0 ≤ y ≤ 0.5, 0 ≤ z ≤ 0.5, 0 ≤ b ≤ 0.05, x+y+z = 1, and M is at least one element selected from the group consisting of Al, Mn, Fe, Ti, Si, Nb, Mo, W, and Zn. The content rates of the elements constituting the lithium-transition metal composite oxide may be measured with an inductively coupled plasma atomic emission spectrometer (ICP-AES), an electron probe micro analyzer (EPMA), an energy dispersive X-ray analyzer (EDX), and the like.

When the electrode 30 is applied to the negative electrode 12, a carbon material such as graphite can be used as the electrode active material (that is, a negative electrode active material) containing a metal element constituting the mixture layer 32 (that is, a negative electrode mixture layer). The graphite may be any of natural graphite such as flake graphite, massive graphite, or amorphous graphite, and artificial graphite such as massive artificial graphite or graphitized mesophase-carbon microbead. For the negative electrode active material, a metal that forms an alloy with Li, such as Si and Sn, a metal compound including Si, Sn, or the like, a lithium-titanium composite oxide, and the like may be used. For example, a Si-containing compound represented by SiOx (0.5 ≤ x ≤ 1.6) or a Si-containing compound in which fine particles of Si are dispersed in a lithium silicate phase represented by Li_{2y}SiO_{(2+y)} (0 < y < 2) may be used in combination with the carbon material such as graphite.

The mixture layer 32 may contain a conductive auxiliary agent, a binder, a thickener, and the like in addition to the electrode active material. Examples of the conductive auxiliary agent include carbon materials such as carbon black, acetylene black, Ketjenblack, graphite, carbon nanotube, carbon nanofiber, and graphene. These may be used alone or in combination of two or more thereof. Examples of the binder include fluorine-containing resins such as polytetrafluoroethylene (PTFE) and polyvinylidene fluoride (PVdF), polyacrylonitrile (PAN), a polyimide, an acrylic resin, a polyolefin, styrene-butadiene rubber (SBR), and nitrile-butadiene rubber (NBR). These may be used alone or in combination of two or more thereof. Examples of the thickener include carboxymethylcellulose (CMC) or a salt thereof (such as CMC-Na), polyacrylic acid (PAA) or a salt thereof (which may be PAA-Na, PAA-K, and the like, or a partially neutralized salt), and polyvinyl alcohol (PVA). These may be used singly or in combination of two or more thereof.

As illustrated in FIG. 2, the mixture layer 32 has a stacked structure composed of n layers from a first layer 32a facing the current collector to an nth layer 32n (n ≥ 2) disposed on the surface. The letter n is an integer of greater than or equal to 2, and an upper limit of n is not particularly limited, but is, for example, 5. The thickness of each layer is not particularly limited, and may be substantially the same.

The exchange current density I₁ at 50% SOC of the first layer 32a is preferably higher than the exchange current density Iₙ at 50% SOC of the nth layer 32n. This allows the uneven reaction in the mixture layer 32 to be suppressed. Since the reaction resistance is the same on the current collector side and the outer surface side when the mixture layer has a single-layered structure, a larger current tends to flow on the outer surface side that is in contact with the separator, resulting in uneven reaction in the mixture layer. The inventors of the present application have found that the mixture layer has a multi-layered structure and I₁ > Iₙ, balancing the ease of current flow between the outer surface side and the current collector side to allow the uneven reaction in the mixture layer to be suppressed. The exchange current densities I₁ and Iₙ can be adjusted, for example, by changing the type of electrode active material. The I₁ and the Iₙ satisfy, for example, a relationship of I₁/Iₙ ≥ 2. Note that SOC represents the depth of charge.

In the case of n ≥ 3, the exchange current density Iₙ₁ at 50% SOC of an n1th layer disposed between the first layer and the nth layer satisfies, with I₁ and Iₙ, a relationship of I₁ > Iₙ₁ > Iₙ, I₁ ≥ Iₙ₁ > Iₙ, or I₁ > Iₙ₁ ≥ Iₙ. This allows the uneven reaction in the mixture layer to be suppressed even with considering the internal composition of the mixture layer.

The exchange current density at 50% SOC of each layer constituting the mixture layer 32 can be calculated, for example, as follows.
(1) A measurement electrode composed of only the first layer 32a on the current collector 31 is produced.
(2) The electrode is charged until the SOC reaches 50%.
(3) A discontinuous charge-discharge pulse is applied to the electrode to measure the voltage response.
(4) The measurement results are Tafel-plotted.
(5) The exchange current density I₁ of the first layer 32a is calculated from a current density intercept of a tangent line in the linear region of the resulting plot.
(5) For each layer up to the nth layer 32n, the exchange current density is calculated in the same manner as in (1) to (4).

The in-solid lithium diffusion coefficient D₁ at 50% SOC of the first layer 32a is preferably larger than the in-solid lithium diffusion coefficient Dₙ at 50% SOC of the nth layer 32n. This allows the uneven reaction in the mixture layer 32 to be suppressed. The inventors of the present application have found that the mixture layer has a multi-layered structure and D₁ > Dₙ, balancing the ease of current flow between the outer surface side and the current collector side to allow the uneven reaction in the mixture layer to be suppressed. The in-solid lithium diffusion coefficients D₁ and Dₙ can be adjusted, for example, by changing the type of electrode active material. The D₁ and the Dₙ satisfy, for example, a relationship of D₁/Dₙ ≥ 5.

In the case of n ≥ 3, the in-solid lithium diffusion coefficient Dₙ₁ at 50% SOC of the n1th layer disposed between the first layer and the nth layer satisfies, with D₁ and Dₙ, a relationship of D₁ > Dₙ₁ > Dₙ, D₁ ≥ Dₙ₁ > Dₙ, or D₁ > Dₙ₁ ≥ Dₙ. This allows the uneven reaction in the mixture layer to be suppressed even with considering the internal composition of the mixture layer.

The in-solid lithium diffusion coefficient at 50% SOC of each layer constituting the mixture layer 32 can be calculated, for example, as follows.
(1) A measurement electrode composed of only the first layer 32a on the current collector 31 is produced.
(2) The electrode is charged until the SOC reaches 50%.
(3) The galvanostatic intermittent titration technique (GITT) is performed on the electrode to calculate the in-solid lithium diffusion coefficient D₁ of the first layer 32a.
(3) For each layer up to the nth layer 32n, the in-solid lithium diffusion coefficient is calculated in the same manner as in (1) and (2).

Next, an example of a method of disposing the mixture layer 32 on the surface of the current collector 31. First, an electrode active material, a conductive auxiliary agent, a binder, and a solvent such as N-methylpyrrolidone (NMP) and water are mixed to prepare a first electrode mixture slurry. An nth electrode mixture slurry corresponding to each layer up to the nth layer 32n is prepared by the same method as the first electrode mixture slurry. Then, the first electrode mixture slurry to the nth electrode mixture slurry are applied on both surfaces of the current collector 31 so as to be sequentially stacked and are dried. Thereafter, the coating film can be rolled with a roller to form the mixture layer 32 in which the first layer 32a to the nth layer 32n are stacked from the current collector 31 side to the surface. In the above method, the coating film is dried after all the electrode mixture slurries are applied, but the coating film may be dried every time each electrode mixture slurry is applied.

### EXAMPLES

Hereinafter, the present disclosure will be further described with Examples, but the present disclosure is not limited to these Examples.

### <Example 1>

### [Production of Positive Electrode]

A polycrystalline lithium-transition metal composite oxide represented by LiNi_{0.5}Co_{0.2}Mn_{0.3}O₂, acetylene black (AB), and polyvinylidene fluoride (PVDF) were mixed at a mass ratio of 98:1:1 and kneaded while adding N-methylpyrrolidone (NMP) to prepare a first positive electrode mixture slurry. A polycrystalline lithium-transition metal composite oxide represented by LiNi_{0.8}Co_{0.15}Al_{0.05}O₂, acetylene black (AB), and polyvinylidene fluoride (PVDF) were mixed at a mass ratio of 98:1:1 and kneaded while adding N-methylpyrrolidone (NMP) to prepare a second positive electrode mixture slurry.

The first positive electrode mixture slurry was applied on both surfaces of a positive electrode current collector composed of aluminum foil, and then the second positive electrode mixture slurry was applied on the coating film of the first positive electrode mixture slurry. At this time, an applying mass ratio per unit area of the first positive electrode mixture slurry and the second positive electrode mixture slurry was set to 1:1. After the coating film was dried, the coating film was rolled with a roller to produce a positive electrode in which a positive electrode mixture layer having a bilayer structure was formed on both surfaces of the positive electrode current collector. The exchange current density at 50% SOC of the first layer was 5.70 A/m², and the exchange current density at 50% SOC of the second layer was 2.84 A/m². At a part of the positive electrode, an exposed portion where the surface of the positive electrode current collector was exposed was provided.

### [Production of Negative Electrode]

Artificial graphite, carboxymethyl cellulose (CMC), and styrene-butadiene rubber (SBR) were mixed at a mass ratio of 100:1:1.2 and kneaded while adding water to prepare a negative electrode mixture slurry. Next, on both surfaces of a negative electrode current collector composed of copper foil, the negative electrode mixture slurry was applied and dried, and then the coating film was rolled with a roller to produce a negative electrode in which the negative electrode mixture layer was formed on both surfaces of the negative electrode current collector. At a part of the negative electrode, an exposed portion where the surface of the negative electrode current collector was exposed was provided.

### [Preparation of Non-Aqueous Electrolyte]

Into a mixed solvent in which ethylene carbonate (EC) and dimethyl carbonate (DMC) were mixed at a volume ratio of 1:3, lithium hexafluorophosphate (LiPF₆) was dissolved at a concentration of 1 mol/L. Furthermore, vinylene carbonate (VC) was dissolved in the mixed solvent at a concentration of 5% by mass to prepare a non-aqueous electrolyte.

### [Production of Secondary Battery]

An aluminum lead was attached to the exposed portion of the positive electrode, and a nickel lead was attached to the exposed portion of the negative electrode. The positive electrode and the negative electrode were spirally wound via a separator in which an alumina particle layer having a thickness of 3 µm was formed on a polyethylene film having a thickness of 12 µm to produce a wound electrode assembly. This electrode assembly was housed in an exterior body, and a nickel lead was welded to a bottom of the exterior body. Next, an aluminum lead was welded to a sealing assembly, the non-aqueous electrolyte was injected, and then an opening portion of the exterior body was sealed with the sealing assembly to obtain a non-aqueous electrolyte secondary battery having a design capacity of 2500 mAh.

### [Evaluation of Difference ΔCc in Li Amount in Positive Electrode]

Under a temperature environment at 25°C, the secondary battery was charged at a constant current of 1 C until a battery voltage reached 4.2 V. Thereafter, the secondary battery was disassembled to take out the positive electrode, and an open circuit voltage was measured in a non-aqueous electrolyte using lithium metal as a reference electrode. Furthermore, a separately prepared aluminum foil was pressed to the second layer side to produce a positive electrode having a reverse-layered structure. The open circuit voltage of this positive electrode was also measured in the same manner. These results were compared with the open circuit voltage of the positive electrode consisting only of the first layer and the open circuit voltage of the positive electrode consisting only of the second layer, both of which were separately measured, to calculate the Li amount in each layer, thereby calculating the difference ΔCc in the Li amount between the positive electrode active material layers. As used herein, Δ Cc represents the absolute value of the difference between x1 and x2 when the composition of the lithium-transition metal composite oxide contained in the first layer is Liₓ₁MO₂ (M is a metal element other than Li) and the composition of the lithium-transition metal composite oxide contained in the second layer is Liₓ₂MO₂ (M is a metal element other than Li) at a battery voltage of 4.2 V.

### <Comparative Example 1-1>

A secondary battery was produced and evaluated in the same manner as in Example 1 except that, in the production of the positive electrode, the positive electrode active materials used for the first positive electrode mixture slurry and the second positive electrode mixture slurry were both changed to a mixture of a polycrystalline lithium-transition metal composite oxide represented by LiNi_{0.5}Co_{0.2}Mn_{0.3}O₂ and a polycrystalline lithium-transition metal composite oxide represented by LiNi_{0.8}Co_{0.15}Al_{0.05}O₂ at a mass ratio of 1:1. The exchange current density at 50% SOC of each of the first layer and the second layer was 4.29 A/m².

### <Comparative Example 1-2>

A secondary battery was produced and evaluated in the same manner as in Example 1 except that, in the production of the positive electrode, the second positive electrode mixture slurry was applied on both surfaces of the positive electrode current collector composed of aluminum foil, and then the first positive electrode mixture slurry was applied on the coating film of the second positive electrode mixture slurry.

### <Example 2>

A secondary battery was produced and evaluated in the same manner as in Example 1 except that, in the production of the positive electrode, the positive electrode active material used for the first positive electrode mixture slurry was changed to a polycrystalline lithium-transition metal composite oxide represented by LiNi_{0.5}Co_{0.15}Al_{0.05}O₂, and the positive electrode active material used for the second positive electrode mixture slurry was changed to a polycrystalline lithium-transition metal composite oxide represented by LiNi_{0.5}Co_{0.15}Al_{0.05}O₂. Since the in-solid lithium diffusion coefficient at 50% SOC of the first layer was 7.38 × 10⁻¹⁵ m²/s, and the in-solid lithium diffusion coefficient at 50% SOC of the second layer was 3.58 × 10⁻¹⁶ m²/s.

### <Comparative Example 2-1>

A secondary battery was produced and evaluated in the same manner as in Example 2 except that, in the production of the positive electrode, the positive electrode active materials used for the first positive electrode mixture slurry and the second positive electrode mixture slurry were both changed to a mixture of a single-crystal lithium-transition metal composite oxide represented by LiNi_{0.5}Co_{0.15}Al_{0.05}O₂ and a polycrystalline lithium-transition metal composite oxide represented by LiNi_{0.8}Co_{0.15}Al_{0.05}O₂ at a mass ratio of 1:1. The in-solid lithium diffusion coefficient at 50% SOC of each of the first layer and the second layer was 3.87 × 10⁻¹⁵ m²/s.

### <Comparative Example 2-2>

A secondary battery was produced and evaluated in the same manner as in Example 2 except that, in the production of the positive electrode, the second positive electrode mixture slurry was applied on both surfaces of the positive electrode current collector composed of aluminum foil, and then the first positive electrode mixture slurry was applied on the coating film of the second positive electrode mixture slurry.

Table 1 shows the evaluation results of the secondary batteries of Example 1 and Comparative Examples 1-1 and 1-2, and Table 2 shows the evaluation results of the secondary batteries of Example 2 and Comparative Examples 2-1 and 2-2.

**[Table 1]**

| | First layer | | Second layer | | ΔCc |
|---|---|---|---|---|---|
| | Composition | Exchange current density | Composition | Exchange current density | |
| Example 1 | LiNi_{0.5}Co_{0.2}Mn_{0.3}O₂ | 5.70 | LiNi_{0.8}Co_{0.15}Al_{0.05}O₂ | 2.84 | 0.0111 |
| Comparative Example 1-1 | Mixture of LiNi_{0.5}Co_{0.2}Mn_{0.3}O₂ and LiNi_{0.8}Co_{0.15}Al_{0.05}O₂ | 4.29 | Mixture of LiNi_{0.3}Co_{0.2}Mn_{0.3}O₂ a nd LiNi_{0.8}Co_{0.13}Al_{0.05}O₂ | 4.29 | 0.0116 |
| Comparative Example 1-2 | LiNi_{0.8}Co_{0.15}Al_{0.05}O₂ | 2.84 | LiNi_{0.5}Co_{0.2}Mn_{0.3}O₂ | 5.70 | 0.0121 |

**[Table 2]**

| | First layer | | Second layer | | ΔCc |
|---|---|---|---|---|---|
| | Composition | Diffusion coefficient | Composition | Diffusion coefficient | |
| Example 2 | Polycrystalline LiNi_{0.8}Co_{0.15}Al_{0.05}O₂ | 7.35×10⁻¹⁵ | Single-crystal LiNi_{0.8}Co_{0.15}Al_{0.05}O₂ | 3.58×10⁻¹⁶ | 0.0165 |
| Comparative Example 2-1 | Mixture of single-crystal LiNi_{0.8}Co_{0.15}Al_{0.05}O₂ and polycrystalline LiNi_{0.8}Co_{0.15}Al_{0.05}O₂ | 3.87×10⁻¹⁵ | Mixture of single-crystal LiNi_{0.8}Co_{0.15}Al_{0.05}O₂ and polycrystalline LiNi_{0.8}Co_{0.15}Al_{0.05}O₂ | 3.87×10⁻¹⁵ | 0.0278 |
| Comparative Example 2-2 | Single-crystal LiNi_{0.8}Co_{0.15}Al_{0.05}O₂ | 3.58×10⁻¹⁶ | Polycrystalline LiNi_{0.8}Co_{0.15}Al_{0.05}O₂ | 7.35×10⁻¹⁵ | 0.0374 |

It is understood from Table 1 that the ΔCc of Example 1 was smaller than those of Comparative Examples 1-1 and 1-2, indicating suppression of uneven reactions. Since the exchange current density I₁ at 50% SOC of the first layer was higher than the exchange current density I₂ at 50% SOC of the second layer, resulting in suppression of uneven reactions. In addition, it is understood from Table 2 that the ΔCc of Example 2 was smaller than those of Comparative Examples 2-1 and 2-2, indicating suppression of uneven reactions. Since the in-solid lithium diffusion coefficient D₁ at 50% SOC of the first layer was higher than the in-solid lithium diffusion coefficient D₂ at 50% SOC of the second layer, resulting in suppression of uneven reactions.

### <Example 3>

### [Production of Positive Electrode]

A polycrystalline lithium-transition metal composite oxide represented by LiNi_{0.8}Co_{0.15}Al_{0.05}O₂, acetylene black (AB), and polyvinylidene fluoride (PVDF) were mixed at a mass ratio of 98:1:1 and kneaded while adding N-methylpyrrolidone (NMP) to prepare a positive electrode mixture slurry. On both surfaces of a positive electrode current collector composed of aluminum foil, the positive electrode mixture slurry was applied and dried, and then the coating film was rolled with a roller to produce a positive electrode in which the positive electrode mixture layer was formed on both surfaces of the positive electrode current collector. At a part of the positive electrode, an exposed portion where the surface of the positive electrode current collector was exposed was provided.

### [Production of Negative Electrode]

Artificial graphite, carboxymethyl cellulose (CMC), and styrene-butadiene rubber (SBR) were mixed at a mass ratio of 100:1:1.2 and kneaded while adding water to prepare a first negative electrode mixture slurry. Natural graphite, carboxymethyl cellulose (CMC), and styrene-butadiene rubber (SBR) were mixed at a mass ratio of 100:1:1.2 and kneaded while adding water to prepare a first negative electrode mixture slurry.

The first negative electrode mixture slurry was applied on both surfaces of a negative electrode current collector composed of copper foil, and then the second negative electrode mixture slurry was applied on the coating film of the first negative electrode mixture slurry. At this time, an applying mass ratio per unit area of the first negative electrode mixture slurry and the second negative electrode mixture slurry was set to 1:1. After the coating film was dried, the coating film was rolled with a roller to produce a negative electrode in which a negative electrode mixture layer having a bilayer structure was formed on both surfaces of the negative electrode current collector. The exchange current density at 50% SOC of the first layer was 0.152 A/m², and the exchange current density at 50% SOC of the second layer was 0.075 A/m². At a part of the negative electrode, an exposed portion where the surface of the negative electrode current collector was exposed was provided.

### [Production of Secondary Battery]

A secondary battery was produced in the same manner as in Example 1. The same non-aqueous electrolyte as that prepared in Example 1 was used.

### [Evaluation of Difference ΔCa in Li Amount in Negative Electrode]

Under a temperature environment at 25°C, the secondary battery was charged at a constant current of 1 C until a battery voltage reached 4.2 V. Thereafter, the secondary battery was disassembled to take out the negative electrode, and an open circuit voltage was measured in a non-aqueous electrolyte using lithium metal as a reference electrode. Furthermore, a separately prepared copper foil was pressed to the second layer side to produce a negative electrode having a reverse-layered structure. The open circuit voltage of this negative electrode was measured in the same manner. These results were compared with the open circuit voltage of the negative electrode consisting only of the first layer and the open circuit voltage of the negative electrode consisting only of the second layer, both of which were separately measured, to calculate the Li amount in each layer, thereby calculating the difference ΔCa in the Li amount between the negative electrode active material layers. As used herein, ΔCa represents the absolute value of the difference between y1 and y2 when the composition of the lithium-transition metal composite oxide contained in the first layer is Li_{y1}C₆ and the composition of the lithium-transition metal composite oxide contained in the second layer is Li_{y2}C₆ at a battery voltage of 4.2 V.

### <Comparative Example 3-1>

A secondary battery was produced and evaluated in the same manner as in Example 3 except that, in the production of the negative electrode, the negative electrode active materials used for the first negative electrode mixture slurry and the second negative electrode mixture slurry were both changed to a mixture of artificial graphite and natural graphite at a mass ratio of 1:1. The exchange current density at 50% SOC of each of the first layer and the second layer was 0.114 A/m².

### <Comparative Example 3-2>

A secondary battery was produced and evaluated in the same manner as in Example 3 except that, in the production of the negative electrode, the second negative electrode mixture slurry was applied on both surfaces of the negative electrode current collector composed of copper foil, and then the first negative electrode mixture slurry was applied on the coating film of the first positive electrode mixture slurry.

### <Example 4>

A secondary battery was produced and evaluated in the same manner as in Example 3 except that, in the production of the negative electrode, the negative electrode active material used for the first negative electrode mixture slurry was changed to artificial graphite coated with natural graphite, and the negative electrode active material used for the second negative electrode mixture slurry was changed to artificial graphite. Since the in-solid lithium diffusion coefficient at 50% SOC of the first layer was 7.24 × 10⁻¹⁴ m²/s, and the in-solid lithium diffusion coefficient at 50% SOC of the second layer was 1.44 × 10⁻¹⁴ m²/s.

### <Comparative Example 4-1>

A secondary battery was produced and evaluated in the same manner as in Example 4 except that, in the production of the negative electrode, the negative electrode active materials used for the first negative electrode mixture slurry and the second negative electrode mixture slurry were both changed to a mixture of artificial graphite coated with natural graphite and artificial graphite at a mass ratio of 1:1. The in-solid lithium diffusion coefficient at 50% SOC of each of the first layer and the second layer was 4.35 × 10⁻¹⁴ m²/s.

### <Comparative Example 4-2>

A secondary battery was produced and evaluated in the same manner as in Example 4 except that, in the production of the negative electrode, the second negative electrode mixture slurry was applied on both surfaces of the negative electrode current collector composed of copper foil, and then the first negative electrode mixture slurry was applied on the coating film of the second negative electrode mixture slurry.

Table 3 shows the evaluation results of the secondary batteries of Example 3 and Comparative Examples 3-1 and 3-2, and Table 4 shows the evaluation results of the secondary batteries of Example 4 and Comparative Examples 4-1 and 4-2.

**[Table 3]**

| | First layer | | Second layer | | ΔCa |
|---|---|---|---|---|---|
| | Composition | Exchange current density | Composition | Exchange current density | |
| Example 3 | Artificial graphite | 0.152 | Natural graphite | 0.075 | 0.516 |
| Comparative Example 3-1 | Mixture of artificial graphite and natural graphite | 0.114 | Mixture of artificial graphite and natural graphite | 0.114 | 0.535 |
| Comparative Example 3-2 | Natural graphite | 0.075 | Artificial graphite | 0.152 | 0.555 |

**[Table 4]**

| | First layer | | Second layer | | ΔCa |
|---|---|---|---|---|---|
| | Composition | Diffusion coefficient | Composition | Diffusion coefficient | |
| Example 4 | Artificial graphite coated with natural graphite | 7.24×10⁻¹⁴ | Artificial graphite | 1.44×10⁻¹⁴ | 0.515 |
| Comparative Example 4-1 | Mixture of artificial graphite coated with natural graphite and artificial graphite | 4.35×10⁻¹⁴ | Mixture of artificial graphite coated with natural graphite and artificial graphite | 4.35×10⁻¹⁴ | 0.518 |
| Comparative Example 4-2 | Artificial graphite | 1.44×10⁻¹⁴ | Artificial graphite coated with natural graphite | 7.24×10⁻¹⁴ | 0.519 |

It is understood from Table 3 that the ΔCa of Example 3 was smaller than those of Comparative Examples 3-1 and 3-2, indicating suppression of uneven reactions. Since the exchange current density I₁ at 50% SOC of the first layer was higher than the exchange current density I₂ at 50% SOC of the second layer, resulting in suppression of uneven reactions. In addition, it is understood from Table 4 that the ΔCa of Example 4 was smaller than those of Comparative Examples 4-1 and 4-2, indicating suppression of uneven reactions. Since the in-solid lithium diffusion coefficient D₁ at 50% SOC of the first layer was higher than the in-solid lithium diffusion coefficient D₂ at 50% SOC of the second layer, resulting in suppression of uneven reactions.

The present disclosure will be further described with the following embodiments.

### Constitution 1:

An electrode for a non-aqueous electrolyte secondary battery, comprising:
a current collector; and
a mixture layer disposed on a surface of the current collector, wherein
the mixture layer has a stacked structure composed of n layers from a first layer disposed on the surface of the current collector to an nth layer (n ≥ 2) disposed on an outer surface, and
an exchange current density I₁ at 50% SOC of the first layer is higher than an exchange current density Iₙ at 50% SOC of the nth layer.

### Constitution 2:

The electrode for a non-aqueous electrolyte secondary battery according to Constitution 1, wherein the I₁ and the Iₙ satisfy a relationship of I₁/Iₙ ≥ 2.

### Constitution 3:

An electrode for a non-aqueous electrolyte secondary battery, comprising:
a current collector; and
a mixture layer disposed on a surface of the current collector, wherein
the mixture layer has a stacked structure composed of n layers from a first layer facing the current collector to an nth layer (n ≥ 2) disposed on the surface, and
an in-solid lithium diffusion coefficient D₁ at 50% SOC of the first layer is higher than an in-solid lithium diffusion coefficient Dₙ at 50% SOC of the nth layer.

### Constitution 4:

The electrode for a non-aqueous electrolyte secondary battery according to Constitution 3, wherein the D₁ and the Dₙ satisfy a relationship of D₁/Dₙ ≥ 5.

### Constitution 5:

A non-aqueous electrolyte secondary battery, comprising:
a positive electrode; and
a negative electrode, wherein
at least one of the positive electrode and the negative electrode is the electrode for a non-aqueous electrolyte secondary battery according to any one of Constitutions 1 to 4.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Electrode (for a non-aqueous electrolyte secondary battery), 31 Current collector, 32 Mixture layer, 32a First layer, 32n Nth layer

## Claims

1. An electrode for a non-aqueous electrolyte secondary battery, comprising:
a current collector; and
a mixture layer disposed on a surface of the current collector, wherein
the mixture layer has a stacked structure composed of n layers from a first layer disposed on the surface of the current collector to an nth layer (n ≥ 2) disposed on an outer surface, and
an exchange current density I₁ at 50% SOC of the first layer is higher than an exchange current density Iₙ at 50% SOC of the nth layer.

2. The electrode for a non-aqueous electrolyte secondary battery according to claim 1, wherein the I₁ and the Iₙ satisfy a relationship of I₁/Iₙ ≥ 2.

3. The electrode for a non-aqueous electrolyte secondary battery according to claim 1, wherein the n satisfies n ≥ 3, and an exchange current density Iₙ₁ at 50% SOC of an n1th layer disposed between the first layer and the nth layer satisfies, with I₁ and Iₙ, a relationship of I₁ > Iₙ₁ > Iₙ, I₁ ≥ Iₙ₁ > Iₙ, or I₁ > Iₙ₁ ≥ Iₙ.

4. An electrode for a non-aqueous electrolyte secondary battery, comprising:
a current collector; and
a mixture layer disposed on a surface of the current collector, wherein
the mixture layer has a stacked structure composed of n layers from a first layer disposed on the surface of the current collector to an nth layer (n ≥ 2) disposed on an outer surface, and
an in-solid lithium diffusion coefficient D₁ at 50% SOC of the first layer is higher than an in-solid lithium diffusion coefficient Dₙ at 50% SOC of the nth layer.

5. The electrode for a non-aqueous electrolyte secondary battery according to claim 4, wherein the D₁ and the Dₙ satisfy a relationship of D₁/Dₙ ≥ 5.

6. The electrode for a non-aqueous electrolyte secondary battery according to claim 4, wherein the n satisfies n ≥ 3, and an in-solid lithium diffusion coefficient Dₙ₁ at 50% SOC of an n1th layer disposed between the first layer and the nth layer satisfies, with D₁ and Dₙ, a relationship of D₁ > Dₙ₁ > Dₙ, D₁ ≥ Dₙ₁ > Dₙ, or D₁ > Dₙ₁ ≥ Dₙ.

7. A non-aqueous electrolyte secondary battery, comprising:
a positive electrode; and
a negative electrode, wherein
at least one of the positive electrode and the negative electrode is the electrode for a non-aqueous electrolyte secondary battery according to any one of claims 1 to 6.
